## Europäisches Patentamt

## European Patent Office

## Office européen des brevets

(11) Veröffentlichungsnummer: **0 181 489**
**B1**

(12) **EUROPÄISCHE PATENTSCHRIFT**

(51) Int. Cl.⁴: **B 60 R  13/02,** B 60 N  1/06, B 60 J  5/04

(45) Veröffentlichungstag der Patentschrift:
**12.04.89**

(21) Anmeldenummer: 85112712.6

(22) Anmeldetag: **08.10.85**

(54) Fahrzeugtür mit Türinnenverkleidung.

(30) Priorität: **02.11.84  DE 3439962**

(43) Veröffentlichungstag der Anmeldung:
**21.05.86 Patentblatt 86/21**

(45) Bekanntmachung des Hinweises auf die Patenterteilung:
**12.04.89 Patentblatt 89/15**

(84) Benannte Vertragsstaaten:
**AT DE FR GB IT NL SE**

(56) Entgegenhaltungen:
**DE-A- 3 026 736
DE-A- 3 203 838
FR-A- 1 359 900
GB-A- 782 485
GB-A- 2 070 425
US-A- 1 986 940
US-A- 2 019 247
US-A- 3 015 516
US-A- 3 264 031
US-A- 3 791 693**

(73) Patentinhaber: **M.A.N. Nutzfahrzeuge GmbH, Dachauer Strasse 667 Postfach 50 06 20, D-8000 München 50 (DE)**

(72) Erfinder: **Kraus, Wolfgang, Eppendorfer Weg 17b, D-2000 Hamburg 20 (DE)**
Erfinder: **John, Herbert, Vogelloh 62, D-8000 München 50 (DE)**
Erfinder: **Watzek, Gerhard, Eduard-Spranger-Strasse 34, D-8000 München 45 (DE)**

ACTORUM AG

## Beschreibung

Die Erfindung betrifft eine Fahrzeugtür mit Seitenfenster, insbesondere Lkw-Fahrerhaustür, aus zumindest einem Aussenblech, dessen Innenseite mindestens zum Teil durch eine Verkleidung abgedeckt ist, wobei die Türinnenverkleidung unterhalb der Fensteröffnung aus zwei integrierten Teilen zusammengesetzt ist und wobei der erste Teil sich über die Breitseite der Tür erstreckt. Aus der US-A-3 015 516 geht eine solcherart ausgebildete Fahrzeugtür hervor.

Aufgabe der Erfindung ist die Schaffung einer Fahrzeugtür der vorgenannten Art, bei der die ohnehin vorhandene Türinnenverkleidung insbesondere im Bereich unterhalb der Fensteröffnung einfach und sehr funktionell aufgebaut ist.

Dies wird erfindungsgemäss dadurch gelöst, dass der über die Breitseite der Tür sich erstreckende Verkleidungsteil mit einem angeformten hinteren, nach innen vorspringenden und schräg nach vorne unten verlaufenden Armlehnenteil verbunden ist und ein Türgriff mit konischer Verjüngung nach vorne und in konischer Verlängerung des Armlehnenteils vorgesehen ist, der bezüglich einer Längsachse a symmetrisch ausgebildet und an einer angeformten Türgriffaufnahme mit unterem Längssteg des Verkleidungsteils befestigt ist.

Besonders vorteilhaft ist es, wenn der Türgriff als Doppelzuziehgriff mit zwei Vertikalöffnungen ausgebildet ist, dessen drei Vertikalstege mit dem Verkleidungsteil verbunden sind.

Insbesondere nimmt der Türgriff einschliesslich Armlehnenteil einen Grossteil der Türbreite ein.

Ein besonders einfacher und steifer Aufbau ergibt sich, wenn am Verkleidungsteil im vorderen und/oder oberen Bereich des Türgriffs Armaturenaufnahmen für die Türinnenverkleidung und den Türöffner angeformt sind. Dadurch wird vorzugsweise der Raum oberhalb des Türgriffs in der Seitenverkleidung ausgenutzt, der ohnehin aufgrund der Konizität des Griffs ansonsten ungenützt wäre. Zudem können Armaturen im Bereich der Türseitenverkleidung an einer Stelle angebracht werden, die sehr leicht bei kurzen Bedienungswegen einer Bedienungsperson zugänglich sind.

Eine vorteilhafte Weiterbildung der Erfindung sieht vor, dass an der Türinnenverkleidung ferner die Fensterschachtabdichtung und deren Abdeckung befestigt ist. Der Türgriff ist aus einem stabilen nachgiebigen Polstermaterial ausgebildet.

Die Erfindung sieht also bei einer Fahrzeugtür oben innen eine Seitenverkleidung vor, die als Multifunktionsteil aus zwei zusammenpassbaren Einzelteilen zusammengesetzt ist, einer Türverkleidung, oben mit Keil-Armlehne und einem Doppelzuziehgriff mit einer Unterarm-Auflage.

Das Verkleidungsteil mit angeformter hinterer Armlehne beinhaltet folgende Funktionen:

1. Verstärkung der Tür im Brüstungsbereich.
2. Befestigung der inneren Fensterschachtabdichtung und deren Abdeckung.
3. Abdeckung der Türmechanik und -scheibe im Brüstungsbereich.
4. Integration von Innenverriegelung und Türinnendrücker (Öffner).
5. Aufnahme des Doppelzuziehgriffs.
6. Gestaltung als Teil-Armlehne (Vertiefung bzw. Erhöhung).

Das zweite Funktionsteil, der Türgriff, insbesondere Doppelzuziehgriff beinhaltet folgende Funktionen:

1. Der Doppelzuziehgriff schafft ergonomisch günstige Reichweiten beim Schliessvorgang der Tür, insbesondere einer breiten LKW-Fahrerhaustür.
2. Die schräge Anordnung der Unterarm-Auflage bringt ergonomisch günstige Verhältnisse bei aufrechter Sitzposition.
3. Der Doppelzuziehgriff, der nach vorne konisch ausgebildet ist, besitzt in seiner Einbaulage eine schräge Symmetrieachse. Dadurch kann nicht nur eine Benutzungsperson einen Arm leicht schräg nach vorne abstützen, sondern es ist insbesondere auch ein im wesentlichen gleich ausgebildeter Türgriff sowohl für die rechte als auch die linke Fahrerhaustür verwendbar.

Die Erfindung wird nachfolgend anhand eines Ausführungsbeispiels unter Bezugnahme auf die Zeichnung näher beschrieben; es zeigen:

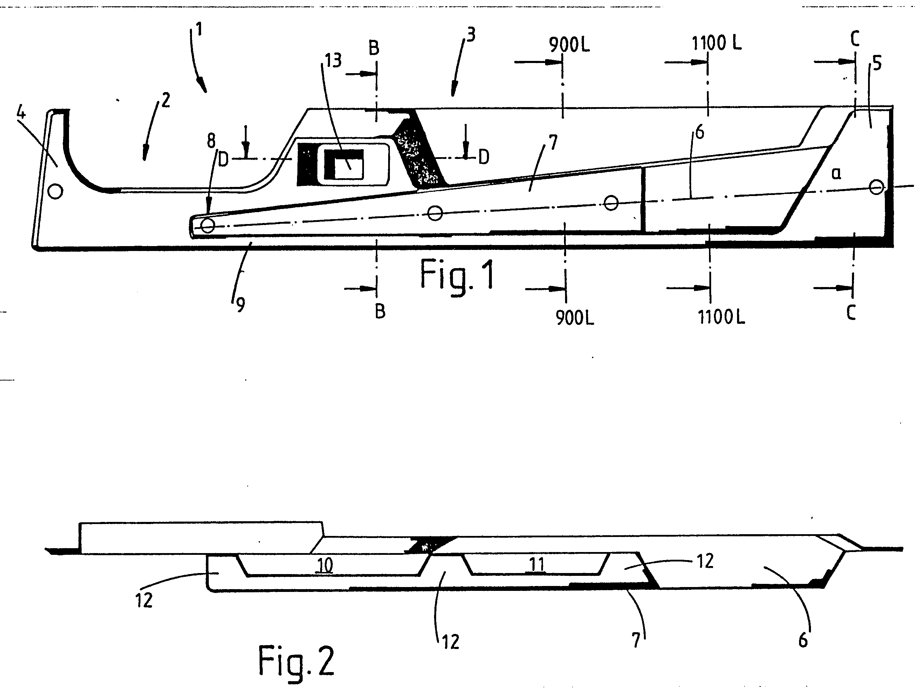

Fig. 1 in schematischer Seitenansicht eine obere innere Türinnenverkleidung einer LKW-Fahrzeugtür in schematischer Darstellung

Fig. 2 eine Draufsicht auf die Türinnenverkleidung nach Fig. 1, und

Fig. 3 bis 7 verschiedene Querschnitte durch die Türinnenverkleidung der Fig. 1 und 2.

Die Fahrzeugtür 1 der Zeichnung weist ein (weiter nicht veranschaulichtes) Ausstellfenster 2 sowie ein (weiter nicht veranschaulichtes) Hubfenster 3 auf. Unterhalb der vorgenannten Fenster 2, 3 befindet sich über die gesamte Breite der Tür die hier interessierende Türinnenverkleidung 4, die aus zwei integrierten Teilen zusammengesetzt ist.

Zum einen ist ein über die gesamte Breitseite der Tür sich erstreckendes Verkleidungsteil 5 aus Kunststoff vorgesehen, welches mit einem hinteren, nach innen vorspringenden und schräg nach vorne und unten verlaufenden Armlehnenteil 6 ausgestattet ist.

Zum anderen ist ein Türgriff 7 mit konischer Verjüngung nach vorne und in konischer Verlängerung des Armlehnenteils 6 vorgesehen, wobei der Türgriff als Doppelzuziehgriff ausgebildet ist und bezüglich einer Längsachse a symmetrisch veläuft. Der Türgriff 7 ist in einer Türgriffaufnahme 8 des Verkleidungsteils 5 aufgenommen, wobei die Türgriffaufnahme 8 einen unteren Längssteg 9 aufweist, auf dem der Türgriff 7 in befestigter Anordnung aufliegen kann.

Der Türgriff 7 weist zwei Vertikalöffnungen 10, 11 und mithin drei Vertikalstege 12 auf, die durch Schrauben mit dem Verkleidungsteil verbunden werden können.

Ersichtlich ist der Türgriff 7 aufgrund der schrägen Symmetrieachse a sowohl für die rechte als auch die linke Fahrzeugtür 1, beispielsweise eines Lastkraftwagens verwendbar.

Die Vorsprünge und Vertiefungen des eigentlichen Verkleidungsteils 5 sorgen für eine hohe Stabilität, insbesondere im Brüstungsbereich der Tür. Zusätzliche Steifigkeit schafft der befestigte Doppelzuziehgriff, der sich leicht in jeder Öffnungslage der Tür handhaben lässt.

Oberhalb des Türgriffs 7 im Bereich der vorderen Vertikalöffnung 10 ist im Bereich zwischen dem Ausstellfenster 2 und dem Hubfenster 3, insbesondere aufgrund der konischen Ausbildung des Türgriffs, ein Freiraum im Verkleidungsteil 5, der beispielsweise für einen Türöffner 13 verwendet werden kann. Eine Bedienungsperson kann den Türöffner 13 bedienen, ohne beispielsweise die Hand von der Armlehne nehmen zu müssen.

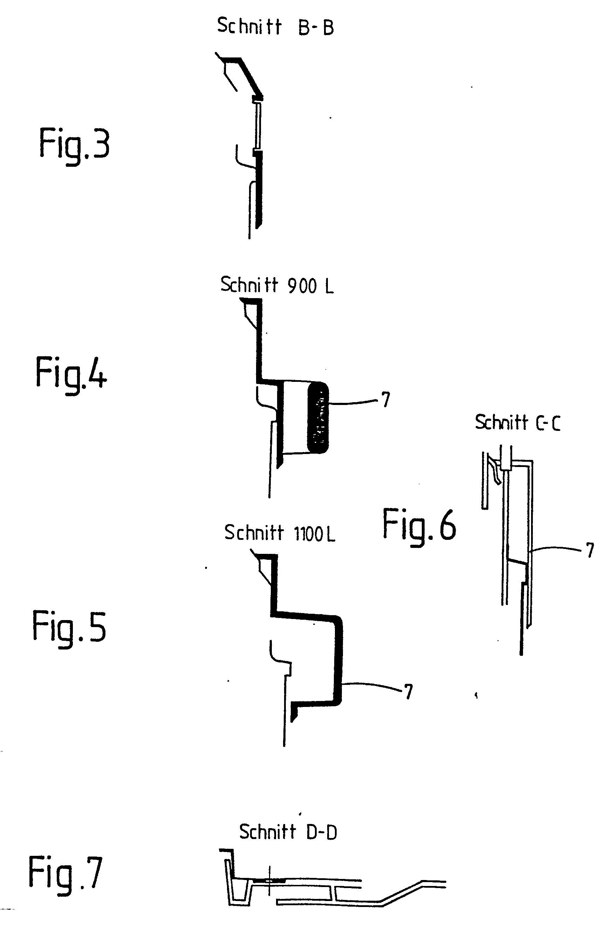

In den Figuren 3 bis 7 sind charakteristische Querschnitte der Türinnenverkleidung 4 im einzelnen veranschaulicht.

## Patentansprüche

1. Fahrzeugtür (1) mit Seitenfenster (2, 3), insbesondere Lkw-Fahrerhaustür, aus zumindest einem Aussenblech, dessen Innenseite mindestens zum Teil durch eine Verkleidung (4) abgedeckt ist, wobei die Türinnenverkleidung (4) unterhalb der Fensteröffnung aus zwei integrierten Teilen (5, 6) zusammengesetzt ist und wobei der erste Teil (5) sich über die Breitseite der Tür (1) erstreckt, dadurch gekennzeichnet, dass der über die Breitseite der Tür (1) sich erstreckende Verkleidungsteil (5) mit einem angeformten hinteren, nach innen vorspringenden und schräg nach vorne unten verlaufenden Armlehnenteil (6) verbunden ist und ein Türgriff (7) mit konischer Verjüngung nach vorne und in konischer Verlängerung des Armlehnenteils (6) vorgesehen ist, der bezüglich einer Längsachse (a) symmetrisch ausgebildet und an einer angeformten Türgriffaufnahme (8) mit unterem Längssteg (9) des Verkleidungsteils (5) befestigt ist.

2. Fahrzeugtür nach Anspruch 1, dadurch gekennzeichnet, dass der Türgriff (7) als Doppelzuziehgriff mit zwei Vertikalöffnungen (10, 11) ausgebildet ist, dessen drei Vertikalstege (12) mit dem Verkleidungsteil (5) verbunden sind.

3. Fahrzeugtür nach Anspruch 1 oder 2, dadurch gekennzeichnet, dass der Türgriff (7) einschliesslich Armlehnenteil (6) einen Grossteil der Türbreite einnimmt.

4. Fahrzeugtür nach Anspruch 1 bis 3, dadurch gekennzeichnet, dass am Verkleidungsteil (5) im vorderen und/oder oberen Bereich des Türgriffs (7) Armaturenaufnahmen für die Türinnenverriegelung und den Türöffner (13) angeformt sind.

5. Fahrzeugtür nach Anspruch 1 bis 4, dadurch gekennzeichnet, dass an der Türinnenverkleidung (4) die Fensterschachtabdichtung und deren Abdeckung befestigt ist.

6. Fahrzeugtür nach Anspruch 1 bis 5, dadurch gekennzeichnet, dass der Türgriff (7) aus einem stabilen, elastischen Material gebildet ist.

## Revendications

1. Porte de véhicule (1) avec glace latérale (2, 3) notamment porte de cabine de conduite de camion, constituée d'au moins une tôle extérieure dont la surface intérieure est recouverte au moins en partie par un revêtement (4), le revêtement intérieur (4) de la porte étant, au-dessous de l'ouverture de glace, composé de deux éléments incorporés (5, 6), le premier élément (5) s'étendant sur le côté large de la porte (1), caractérisé en ce que l'élément de revêtement (5) s'étendant sur le côté large de la porte (1) est assemblé avec un élément accoudoir arrière (6) formé par moulage, cet élément étant en saillie vers l'intérieur et s'étendant obliquement vers le bas et vers l'avant, une poignée de porte (7) allant en s'amincissant en coin vers l'avant étant prévue dans le prolongement de la forme en coin de l'élément d'appui de bras (6), cette poignée étant constituée symétriquement par rapport à un axe longitudinal (a) et étant fixée sur un montage de poignée de porte moulé (8) avec une nervure inférieure longitudinale (9) de l'élément de revêtement (5).

2. Porte de véhicule selon la revendication 1, caractérisée en ce que la poignée de porte (7) est constituée en tant que poignée à double prise avec deux ouvertures verticales (10, 11) dont les trois nervures verticales (12) sont assemblées avec l'élément de revêtement (5).

3. Porte de véhicule selon la revendication 1 ou 2, caractérisée en ce que la poignée de porte (7) prend, en y incluant l'élément accoudoir (6), une grande partie de la largeur de la porte.

4. Porte de véhicule selon les revendications 1 à 3, caractérisée en ce que des logements d'appareillage pour le verrouillage intérieur de la porte et la serrure de porte (13) sont formés par moulage dans l'élément de revêtement (5), dans la zone avant et/ou la zone supérieure de la poignée de porte (7).

5. Porte de véhicule selon les revendications 1 à 4, caractérisée en ce que l'élément d'étanchéité du logement de glace et son élément de recouvrement sont fixés sur le revêtement intérieur (4) de la porte.

6. Porte de véhicule selon les revendications 1 à 5, caractérisée en ce que la poignée de porte (7) est constituée en une matière élastique robuste.

## Claims

1. A vehicle door (1) with side windows (2, 3), more particularly a lorry cab door, comprising at least one outer metal sheet, whose inner surface is at least partially covered by a panelling (4), the inner door panelling (4) beneath the window aperture being formed by two integral parts (5, 6), the first part (5) extending over the breadth of the door (1), characterised in that the panelling part (5) extending over the breadth of the door (1) is connected with a rear arm rest part (6), which is formed on said panelling part (5), which projects inwards and which slopes downwards towards the front, and a door handle (7) is provided, which narrows conically towards the front and in the conical extension of the arm rest part (6), which is symmetrically formed relative to a longitudinal axis (a) and which is secured at a formed-on door handle receiving part (8) to the lower longitudinal crosspiece (9) of the panelling part (5).

2. A vehicle door according to claim 1, characterised in that the door handle (7) is designed as a double closing handle having two vertical openings (10, 11), the three vertical webs (12) of the handle being connected with the panelling part (5).

3. A vehicle door according to claim 1 or 2, characterised in that the door handle (7) together with the arm rest part (6) covers a large proportion of the door width.

4. A vehicle door according to claims 1 to 3, characterised in that on the panelling part (5) in the front and/or upper region of the door handle (7) fitting mountings are formed for the inner door locking and the door opener (13).

5. A vehicle door according to claims 1 to 4, characterised in that the window shaft seal and its cover are secured to the inner door panelling (4).

6. A vehicle door according to claims 1 to 5, characterised in that the door handle (7) is made of a stable resilient material.



Fig.1

Fig.2

2/2

Schnitt B-B

Fig.3

Schnitt 900 L

Fig.4

7

Schnitt C-C

Fig.6

7

Schnitt 1100 L

Fig.5

7

Schnitt D-D

Fig.7